# DEMANDE DE BREVET EUROPEEN

(11) **EP 4 089 276 A1**
(43) Date de publication de la demande: **16.11.2022**
(21) Numéro de dépôt: 22169816.0
(22) Date de dépôt: 25.04.2022
(51) Int. Cl.: F02M 55/00, F02M 55/02, H01M 8/04082, F16L 19/028

(54) **DISPOSITIF D'ALIMENTATION EN COMBUSTIBLE**

(30) Priorité: 29.04.2021 FR 2104503
(71) Demandeur: Duncha France, 41033 BLOIS (FR)
(72) Inventeur: MALLARD, Patrick, 41033 BLOIS CEDEX (FR); PITON, Antony, 41033 BLOIS CEDEX (FR); SIRIEIX, David, 41033 BLOIS CEDEX (FR)
(74) Mandataire: Loyer & Abello

(57) **Abrégé**

L'invention concerne un dispositif d'alimentation en combustible comprenant :
- une interface de connexion (2),
- un tube (4) raccordé à l'interface de connexion à l'aide d'un dispositif de raccordement, dans lequel le dispositif de raccordement comporte :
- un embout (6) comportant un corps (7) et une tête (8) comprenant une extrémité avant (9) et un extrémité arrière (10),
- un écrou (11) comportant une portion filetée d'écrou (12),
- une bague (16) située autour du corps (7) de l'embout (6) et à l'intérieur de l'écrou (11), la bague (16) comprenant une première surface (17) en contact avec l'extrémité arrière (10), et une deuxième surface (18) en contact avec la surface d'appui (15),
dans lequel l'extrémité arrière (10) de la tête (8) et la première surface (17) sont configurés pour former une liaison rotule ,
et dans lequel le canal comporte une surface de guidage (19).

## Description

### Domaine technique

L'invention se rapporte au domaine des dispositifs d'alimentation en combustible, notamment dans le domaine des moteurs à combustion interne et des piles à combustible. Le combustible peut être un carburant destiné à alimenter un moteur à combustion interne ou un réactif réducteur destiné à alimenter une pile à combustible.

### Arrière-plan technologique

Les dispositifs d'alimentation en combustible de l'état de la technique, par exemple ceux dans le domaine des moteurs à combustion interne, comportent une rampe commune présentant une chambre principale, et une interface de connexion comportant un canal d'écoulement débouchant dans la chambre principale et destiné à être raccordé à un tube pour le transport de combustible.

Afin de raccorder le tube et l'interface de connexion, il est prévu un dispositif de raccordement comprenant un embout et un écrou. L'embout comporte un corps fixé à une extrémité du tube et une tête comprenant une extrémité avant coopérant avec le canal d'écoulement et une extrémité arrière. L'écrou comporte une portion filetée coopérant avec la portion filetée de l'interface de connexion, et une portion d'appui venant coopérer avec l'extrémité arrière de la tête de l'embout de sorte à fixer la tête dans le canal d'écoulement.

Toutefois, ce genre de raccordement ne permet pas d'étancher de manière optimale l'assemblage entre le tube et l'interface de connexion car le raccordement ne prend pas en compte les tolérances de fabrication pouvant aboutir à des défauts géométriques comme les défauts de coaxialité entre les différents éléments.

### Résumé

Une idée à la base de l'invention est d'améliorer l'étanchéité de la liaison entre le tube pour le transport de combustible et l'interface de connexion en prenant en compte les tolérances de fabrication pouvant amener des défauts géométriques, par exemple de coaxialité, notamment entre l'embout et le canal d'écoulement.

Selon un mode de réalisation, l'invention fournit un dispositif d'alimentation en combustible comprenant :
- une interface de connexion comprenant un canal d'écoulement pour le combustible, et une portion filetée d'interface,
- un tube pour le transport de combustible raccordé à l'interface de connexion à l'aide d'un dispositif de raccordement, le tube comprenant un embout comportant un corps fixé à une extrémité du tube et une tête comprenant une extrémité avant coopérant avec le canal d'écoulement de l'interface de connexion et un extrémité arrière, l'embout étant configuré pour conduire le combustible du tube vers le canal d'écoulement,
   dans lequel le dispositif de raccordement comporte
- un écrou comportant une portion filetée d'écrou coopérant avec la portion filetée d'interface de sorte à permettre une rotation de l'écrou par rapport à l'interface de connexion selon un axe de vissage, et une portion d'appui reliée à la portion filetée d'écrou et comprenant une surface d'appui, l'embout passant au travers de la portion d'appui avec un jeu radial, la tête étant située à l'intérieur de l'écrou,
- une bague située autour du corps de l'embout et à l'intérieur de l'écrou, un diamètre extérieur de la bague étant strictement inférieur à un diamètre intérieur de l'écrou de sorte à définir un jeu radial entre la bague et l'écrou, la bague comprenant une première surface tournée vers et en contact avec l'extrémité arrière de la tête, et une deuxième surface en contact avec la surface d'appui, la deuxième surface de bague et la surface d'appui étant configurés pour former une liaison comportant un degré de liaison en translation selon l'axe de vissage et des degrés de liberté en translation dans le plan normal à l'axe de vissage,
   dans lequel l'extrémité arrière de la tête et la première surface sont configurés pour former une liaison rotule,
   et dans lequel le canal d'écoulement comporte une surface de guidage formée autour d'un axe de révolution, la surface de guidage et l'extrémité avant de la tête de l'embout étant configurées pour guider l'embout vers une position dans laquelle l'extrémité avant de la tête est en contact avec la surface de guidage tout autour de l'axe de révolution, lors du vissage de l'écrou sur l'interface de connexion.

Grâce à ces caractéristiques, la bague est agencée de sorte à pouvoir se déplacer dans le plan normal à l'axe de vissage afin de compenser un défaut de coaxialité entre l'écrou, l'interface de connexion et l'embout. De plus, la liaison rotule entre la tête de l'embout et la première surface d'appui permet de compenser le non alignement entre le tube et l'interface de connexion en autorisant l'embout de tube à s'incliner par rapport à l'interface de connexion. La liaison rotule et la bague permettent ainsi d'améliorer l'étanchéité du raccordement entre le tube et l'interface de connexion.

Selon des modes de réalisation, un tel dispositif d'alimentation en combustible peut comporter une ou plusieurs des caractéristiques suivantes.

Selon un mode de réalisation, la portion filetée d'interface est formée sur une surface externe de l'interface de connexion. Ainsi, la portion filetée d'écrou entoure la portion filetée d'interface.

Selon un autre mode de réalisation, la portion filetée d'interface est formée dans une surface interne de l'interface de connexion. Ainsi, la portion filetée d'interface entoure la portion filetée d'écrou.

Selon un mode de réalisation, l'axe de révolution autour duquel est formée la surface de guidage est parallèle à l'axe de vissage, de préférence confondue à l'axe de vissage, aux tolérances géométriques de fabrication près.

Selon un mode de réalisation, ledit embout est coaxial avec l'axe de révolution de la surface de guidage.

Selon un mode de réalisation, l'extrémité arrière de la tête est réalisée sous la forme d'une zone sphérique.

Une zone sphérique est la portion de la surface d'une sphère comprise entre deux plans parallèles qui coupent cette sphère.

Selon un mode de réalisation, la première surface de la bague est réalisée sous la forme d'une zone sphérique de sorte que le contact entre la première surface et l'extrémité arrière est surfacique.

Selon un mode de réalisation, la première surface de la bague est réalisée sous la forme d'un tronc de cône de révolution de sorte que le contact entre la première surface et l'extrémité arrière est linéaire tout autour de la tête de l'embout.

Selon un mode de réalisation, la surface d'appui de l'écrou et/ou la deuxième surface de la bague est/sont plane(s), de préférence la surface d'appui et la deuxième surface sont planes.

Selon un mode de réalisation, l'extrémité avant de la tête de l'embout et la surface de guidage du canal d'écoulement sont configurés pour former une liaison rotule.

Selon un mode de réalisation, l'extrémité avant de la tête de l'embout est réalisée sous la forme d'une zone sphérique.

Selon un mode de réalisation, la surface de guidage du canal d'écoulement est réalisée sous la forme d'un tronc de cône de révolution.

Selon un mode de réalisation, un diamètre intérieur de la portion d'appui de l'écrou est strictement inférieur au diamètre intérieur de l'écrou.

Selon un mode de réalisation, un diamètre intérieur de la portion d'appui de l'écrou est strictement supérieur à un diamètre extérieur du corps de l'embout.

Selon un mode de réalisation, l'extrémité avant et l'extrémité arrière de la tête définissent à leur intersection un diamètre maximale extérieur de la tête, le diamètre maximal extérieur de la tête étant strictement supérieur à un diamètre intérieur de la bague.

Selon un mode de réalisation, l'axe de révolution autour duquel est formée la surface de guidage est sensiblement parallèle à l'axe de vissage, aux tolérances géométriques de fabrication près.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig. 1] La figure 1 représente une vue éclatée d'un dispositif d'alimentation en combustible selon un mode de réalisation.
[Fig. 2] La figure 2 est une vue en coupe du dispositif de raccordement fixé à l'interface de connexion selon un premier mode de réalisation.
[Fig. 3] La figure 3 est une vue du détail III de la figure 2 des liaisons de la bague avec l'écrou et la tête de l'embout.
[Fig. 4] La figure 4 est une vue en coupe du dispositif de raccordement fixé à l'interface de connexion selon un deuxième mode de réalisation.
[Fig. 5] La figure 5 est une vue du détail V de la figure 4 des liaisons de la bague avec l'écrou et la tête de l'embout.
[Fig. 6] La figure 6 est une vue en coupe du dispositif de raccordement fixé à l'interface de connexion selon un troisième mode de réalisation.

### Description des modes de réalisation

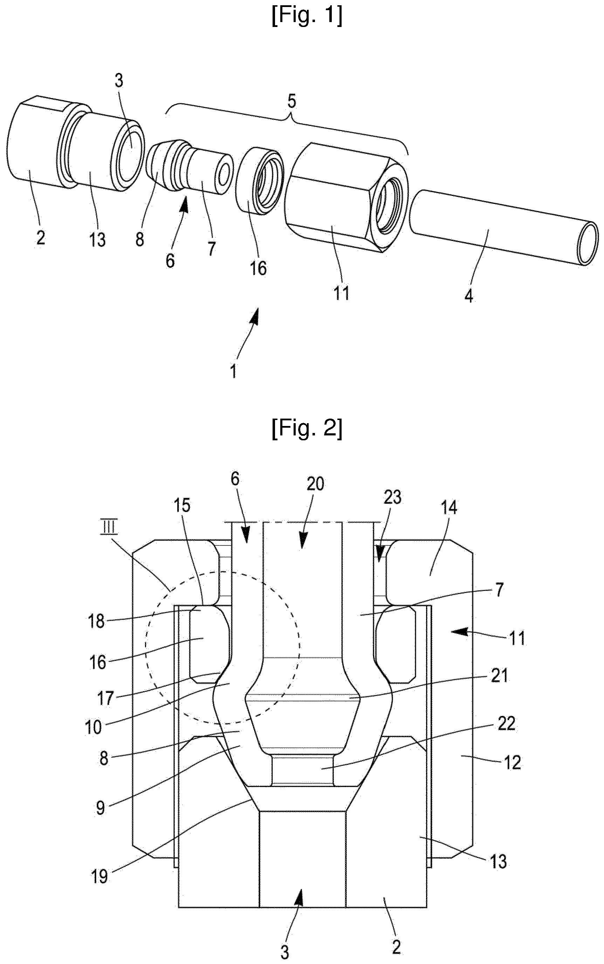

La figure 1 représente un dispositif d'alimentation en combustible 1 comportant une interface de connexion 2 qui est par exemple formé dans le cas d'un moteur à combustion interne dans une rampe commune (non représentée). Cette interface de connexion 2 est munie d'un canal d'écoulement 3 pour le combustible. Le dispositif d'alimentation en combustible 1 comporte également au moins un tube 4 pour le transport du combustible, qui relie par exemple un réservoir à la rampe commune. Le tube 4 est ainsi raccordé à l'interface de connexion 2 afin de faire circuler le combustible d'un point à un autre dans le système qui peut être par exemple un moteur à combustion interne ou une pile à combustible. L'interface de connexion 2 comprend sur une surface extérieure une portion filetée d'interface 13.

Le tube 4 et l'interface de connexion 2 sont reliés l'un à l'autre à l'aide d'un dispositif de raccordement 5 qui réalise à la fois la fixation et l'étanchéité dans la liaison entre le tube 4 et l'interface de connexion 2. Le dispositif de raccordement 5 va être décrit plus en détails par la suite.

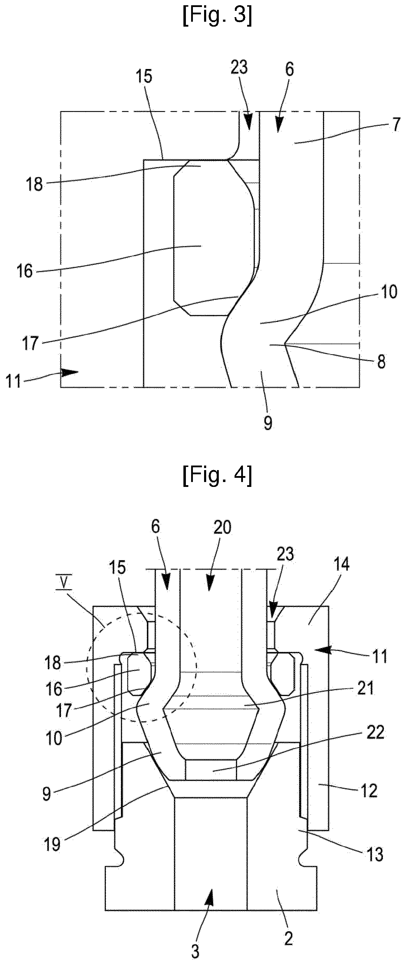

Les figures 2 et 4 représentent plus particulièrement le dispositif de raccordement 5 assemblé à l'interface de connexion 2 et au tube 4 (non représenté sur les figures 2 et 4).

Le tube 4 comprend un embout 6 comportant un corps 7 et une tête 8. La tête 8 comprend une extrémité avant 9 coopérant avec le canal d'écoulement 3 de l'interface de connexion 2 et une extrémité arrière 10. L'embout 6 est configuré pour conduire le combustible du tube 4 vers le canal d'écoulement 3. Selon un mode de réalisation, l'embout 6 et la portion restante du tube 4 sont formés d'un seul tenant. Selon un autre mode de réalisation, l'embout 6 et la portion restante du tube 4 sont deux pièces distinctes fixées l'une à l'autre.

L'embout 6 comprend un canal d'embout 20 débouchant qui traverse de part en part la tête 8 et le corps 7.

Le canal d'embout 20 permet de créer une continuité dans le trajet du combustible entre le tube 4 et le canal d'écoulement 3.

Le canal d'écoulement 3 comporte de plus une surface de guidage 19 formée autour d'un axe de révolution, qui dans le cas schématique illustré en figure 2 est confondu avec l'axe de vissage. La surface de guidage 19 forme la portion d'entrée du canal d'écoulement 3 pour l'embout 6. La surface de guidage 19 et l'extrémité avant 9 de la tête 8 sont en effet configurées pour guider l'embout 6 vers une position dans laquelle l'extrémité avant 9 de la tête 8 est en contact avec la surface de guidage 19 tout autour de l'axe de révolution, lors du vissage de l'écrou 11 sur l'interface de connexion 2 afin d'étancher la liaison entre l'embout 6 et l'interface de connexion 2.

Le dispositif de raccordement 5 comprend également un écrou 11 comportant une portion filetée d'écrou 12 coopérant avec la portion filetée d'interface 13 de sorte à permettre une rotation de l'écrou 11 par rapport à l'interface de connexion selon un axe de vissage. Ainsi, l'écrou 11 vient se visser tout autour de l'interface de connexion 2. L'écrou 11 comprend de plus une portion d'appui 14 reliée à la portion filetée d'écrou 12 et comprenant une surface d'appui 15. La portion d'appui 14 comporte un orifice 23 dans lequel le corps 7 de l'embout 6 traverse l'écrou 11. Afin d'assurer un jeu radial entre l'écrou 11 et le corps 7 de l'embout 6, le diamètre de l'orifice 23 est supérieur au diamètre extérieur du corps 7. La tête 8 est située à l'intérieur de la portion filetée d'écrou 12.

Le dispositif de raccordement 5 comprend enfin une bague 16 située autour du corps 7 de l'embout 6 et à l'intérieur de l'écrou 11. De plus, afin d'assurer un jeu radial entre la bague 16 et l'écrou 11, le diamètre extérieur de la bague 16 est inférieur au diamètre intérieur de l'écrou 12. La bague 16 comprend une première surface 17 en contact avec l'extrémité arrière 10 de la tête 8, et une deuxième surface 18 en contact avec la surface d'appui 15 de l'écrou 11. La bague 16 joue ainsi le rôle d'intermédiaire entre l'embout 6 et l'écrou 11 de sorte que lorsque l'écrou 11 est vissé sur l'interface de connexion 2 et que la surface d'appui 15 vient appuyer contre la deuxième surface 18, l'effort de serrage est transmis sur la tête 8 de l'embout 6.

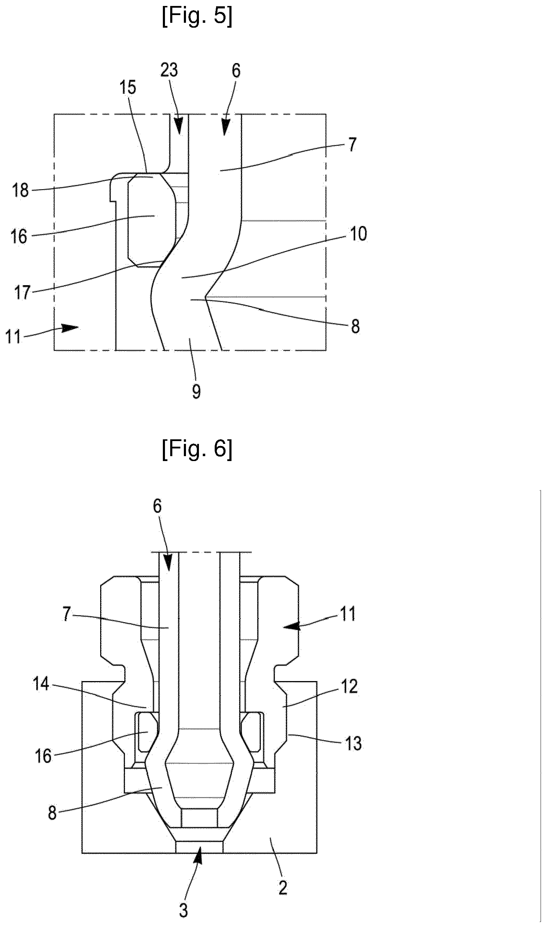

Dans les modes de réalisation illustrés en figures 3 et 5, la deuxième surface 18 de la bague 16 et la surface d'appui 15 sont toutes les deux planes et forment ainsi une liaison appui-plan comportant un degré de liaison en translation selon l'axe de vissage et des degrés de liberté en translation dans le plan normal à l'axe de vissage. Ainsi, la bague 16 de par sa dimension inférieure à l'écrou 11 et sa liaison appui-plan peut se déplacer dans le plan normal à l'axe de vissage afin d'aider au positionnement de la tête 8 de l'embout 6 dans le canal d'écoulement 3 en prenant en compte d'éventuels défauts de coaxialité.

De plus, le tube 4 n'est pas nécessairement dans l'axe de vissage avant d'être relié l'interface de connexion 2. Il est donc avantageux de prévoir des degrés de liberté en rotation pour l'embout 6 lors de son assemblage entre l'écrou 11 et l'interface de connexion 2 afin d'éviter de trop solliciter la liaison entre l'embout 6 et le tube 4. Pour cela, la liaison entre l'extrémité arrière 10 de la tête 8 et la première surface 17 de la bague est une liaison rotule.

Dans le premier mode de réalisation illustré notamment en figure 3, l'extrémité arrière 10 est réalisée sous la forme d'une zone sphérique tandis que la première surface 17 est réalisée sous la forme d'un tronc de cône de révolution. La liaison entre la première surface 17 et l'extrémité arrière 10 est donc une liaison cône/sphère qui est l'une des formes d'une liaison rotule.

Dans le deuxième mode de réalisation illustré notamment en figure 5, l'extrémité arrière 10 est réalisée sous la forme d'une zone sphérique tandis que la première surface 17 est réalisée sous la forme d'une zone sphérique. La liaison entre la première surface 17 et l'extrémité arrière 10 est donc une liaison sphère/sphère qui est l'une des formes d'une liaison rotule.

Il a été également constaté que, pour favoriser davantage cette inclinaison de l'embout 6 par rapport à l'interface de connexion 2 en cas de non alignement du tube 2, il est également avantageux de prévoir que la liaison entre l'extrémité avant 9 de la tête 8 et la surface de guidage 19 de l'interface de connexion 2 soit une liaison rotule.

Pour cela et comme visible en figures 2 et 4, l'extrémité avant 9 est réalisée sous la forme d'une zone sphérique tandis que la surface de guidage est réalisée sous la forme d'un tronc de cône de révolution. La liaison entre la première surface 17 et l'extrémité arrière 10 forme donc ainsi une liaison cône/sphère qui est l'une des formes d'une liaison rotule.

Ainsi, le dispositif de raccordement permet d'une part de corriger les éventuels défauts de coaxialité et d'autre part de corriger des défauts géométriques par exemple une inclinaison du tube 4 par rapport à l'interface de connexion 2.

La figure 6 représente un troisième mode de réalisation qui se distingue du premier mode de réalisation de la figure 2 par la forme de l'écrou 11 et de l'interface de connexion 2. En effet, contrairement à la figure 2, la portion filetée d'interface 13 est formée dans une surface interne de l'interface de connexion 2. Ainsi dans ce mode de réalisation, l'écrou 11 est vissé via la portion filetée d'écrou 12 à l'intérieur de l'interface de connexion 2 de sorte que ce soit la portion filetée d'interface 13 qui entoure la portion filetée d'écrou 12.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Dispositif d'alimentation en combustible (1) comprenant :
- une interface de connexion (2) comprenant un canal d'écoulement (3) pour le combustible, et une portion filetée d'interface (13),
- un tube (4) pour le transport de combustible raccordé à l'interface de connexion (2) à l'aide d'un dispositif de raccordement (5),le tube comprenant un embout (6) comportant un corps (7) et une tête (8) comprenant une extrémité avant (9) coopérant avec le canal d'écoulement (3) de l'interface de connexion (2) et un extrémité arrière (10), l'embout (6) étant configuré pour conduire le combustible du tube (4) vers le canal d'écoulement (3),
et dans lequel le dispositif de raccordement (5) comporte :
- un écrou (11) comportant une portion filetée d'écrou (12) coopérant avec la portion filetée d'interface (13) de sorte à permettre une rotation de l'écrou (11) par rapport à l'interface de connexion (2) selon un axe de vissage, et une portion d'appui (14) reliée à la portion filetée d'écrou (12) et comprenant une surface d'appui (15), l'embout (6) passant au travers de la portion d'appui avec un jeu radial, la tête (8) étant située à l'intérieur de l'écrou (11),
- une bague (16) située autour du corps (7) de l'embout (6) et à l'intérieur de l'écrou (11), un diamètre extérieur de la bague (16) étant strictement inférieur à un diamètre intérieur de l'écrou (11) de sorte à définir un jeu radial entre la bague (16) et l'écrou (11), la bague (16) comprenant une première surface (17) tournée vers et en contact avec l'extrémité arrière (10) de la tête (8), et une deuxième surface (18) en contact avec la surface d'appui (15), la deuxième surface (18) de bague et la surface d'appui (15) étant configurés pour former une liaison comportant un degré de liaison en translation selon l'axe de vissage et des degrés de liberté en translation dans le plan normal à l'axe de vissage,
dans lequel l'extrémité arrière (10) de la tête (8) et la première surface (17) sont configurés pour former une liaison rotule,
et dans lequel le canal d'écoulement (3) comporte une surface de guidage (19) formée autour d'un axe de révolution, la surface de guidage (19) et l'extrémité avant (9) de la tête (8) de l'embout (6) étant configurées pour guider l'embout (6) vers une position dans laquelle l'extrémité avant (9) de la tête (8) est en contact avec la surface de guidage (19) tout autour de l'axe de révolution, lors du vissage de l'écrou (11) sur l'interface de connexion (2), l'extrémité avant (9) de la tête (8) de l'embout (6) et la surface de guidage (19) du canal d'écoulement (3) étant configurés pour former une liaison rotule.

2. Dispositif d'alimentation en combustible (1) selon la revendication 1, dans lequel l'extrémité arrière (10) de la tête (8) est réalisée sous la forme d'une zone sphérique.

3. Dispositif d'alimentation en combustible (1) selon la revendication 2, dans lequel la première surface (17) de la bague (16) est réalisée sous la forme d'une zone sphérique de sorte que le contact entre la première surface (17) et l'extrémité arrière (10) est surfacique.

4. Dispositif d'alimentation en combustible (1) selon la revendication 2, dans lequel la première surface (17) de la bague (16) est réalisée sous la forme d'un tronc de cône de révolution de sorte que le contact entre la première surface (17) et l'extrémité arrière (10) est linéaire tout autour de la tête (8) de l'embout (6).

5. Dispositif d'alimentation en combustible (1) selon l'une des revendications 1 à 4, dans lequel la surface d'appui (15) de l'écrou (11) et/ou la deuxième surface (18) de la bague (16) est/sont plane(s).

6. Dispositif d'alimentation en combustible (1) selon l'une des revendications 1 à 5, dans lequel l'extrémité avant (9) de la tête (8) de l'embout (6) est réalisée sous la forme d'une zone sphérique.

7. Dispositif d'alimentation en combustible (1) selon l'une des revendications 1 à 6, dans lequel la surface de guidage (19) du canal d'écoulement (3) est réalisée sous la forme d'un tronc de cône de révolution.

8. Dispositif d'alimentation en combustible (1) selon l'une des revendications 1 à 7, dans lequel l'extrémité avant (9) et l'extrémité arrière (10) de la tête (8) définissent à leur intersection un diamètre maximale extérieur de la tête (8), le diamètre maximal extérieur de la tête (8) étant strictement supérieur à un diamètre intérieur de la bague (16).

9. Dispositif d'alimentation en combustible (1) selon l'une des revendications 1 à 8, dans lequel la portion filetée d'interface (13) est formée sur une surface externe de l'interface de connexion (2) ou sur une surface interne de l'interface de connexion (2).
